# EUROPEAN PATENT APPLICATION

(11) **EP 4 538 566 A1**
(43) Date of publication of application: **16.04.2025**
(21) Application number: 23867108.5
(22) Date of filing: 19.07.2023
(51) Int. Cl.: F16K 3/314, F16K 11/074, B60H 1/00

(54) **INTEGRATED VALVE CORE AND MULTIPORT VALVE COMPRISING SAME, VALVE PUMP DEVICE, AND VEHICLE BODY THERMAL MANAGEMENT SYSTEM**

(30) Priority: 21.09.2022 CN 202211152689
(71) Applicant: Zhejiang Geely Holding Group Co., Ltd, Hangzhou, Zhejiang 310051 (CN); Zhejiang Liankong Technologies Co., Ltd, Ningbo, Zhejiang 315336 (CN)
(72) Inventor: LIN, Bingrong, Hangzhou, Zhejiang 310051 (CN); XU, Junbo, Hangzhou, Zhejiang 310051 (CN); CAPOU, Florent Pierre, Hangzhou, Zhejiang 310051 (CN); XUE, Jinyuan, Hangzhou, Zhejiang 310051 (CN); WU, Chunming, Hangzhou, Zhejiang 310051 (CN); DAI, Haijiang, Hangzhou, Zhejiang 310051 (CN)
(74) Representative: Range, Christopher William
(86) International application number: PCT/CN2023/108108
(87) International publication number: WO 2024/060813

(57) **Abstract**

The present disclosure provides an integrated valve core. A valve core body of the integrated valve core has at least two docking regions at an end surface of the valve core body. The at least two docking regions are arranged in a circumferential direction of the valve core body. Each of the at least two docking regions includes a conduction region and a cutoff region that are arranged in a circumferential direction of the valve core body. For two adjacent docking regions of the at least two docking regions, the conduction region of one of the two adjacent docking regions is adjacent to the conduction region of another one of the two adjacent docking regions, or the cutoff region of one of the two adjacent docking regions is adjacent to the cutoff region of another one of the two adjacent docking regions. Provided are an integrated multi-way valve including a valve core body and a valve seat. Provided are an integrated valve pump apparatus including the integrated multi-way valve as described above and a double-layer flow integrated plate. Provided are a thermal management system for a vehicle body including the integrated multi-way valve as described above or the integrated valve pump apparatus as described above. In the valve core of the present disclosure, the valve core has a structural foundation for realizing alternate state switching through an arrangement and layout of the conduction region and the cutoff region in the docking region, which can be applied to an integrated design of the multi-way valve. By adopting the integrated multi-way valve or the integrated valve pump apparatus applied to the thermal management system for the vehicle body, the thermal management system for the vehicle body may reduce the number of valves and pipelines, lighten weights, decrease the space occupied by the layout, and allows for a more diversified range of switching modes, thereby satisfying more designs for thermal management operation conditions for the vehicle body, and achieving purposes of high efficiency and energy saving.

## Description

### CROSS-REFERENCE TO RELATED APPLICATIONS

This application claims priorities to Chinese Patent Application No. CN202211152689.0, filed on September 21, 2022, the entire contents of which are incorporated herein by reference.

### FIELD

The present disclosure relates to the technical field of valves, and in particular, to an integrated valve core and a multi-way valve thereof, a valve pump apparatus, and a thermal management system for a vehicle body.

### BACKGROUND

In a thermal management system for a pure electric vehicle, there are a plurality of circulation loops designed. In thermal management principles for a vehicle body, a plurality of solenoid valves are required to achieve switching between various operation conditions. In currently available vehicle models, it is common to use a combination of a plurality of three-way valves and a plurality of four-way valves are common. At present, in order to enhance endurance mileage of the pure electric vehicle, a thermal management design for the vehicle body requires an increasing number of operation conditions. From aspects of cost saving, light reduction, layout space, and the like, it is more important to integrate the plurality of three-way valves and the plurality of four-way valves into a smaller number of multi-way valves. In the prior art, there are many integrated multi-way valves. However, when two external channels need to be alternately switched and used in conduction and cutoff states, a simple and practical structure is needed to satisfy requirements of cost saving, weight reduction, layout space, and the like. In this way, a design for the simple and practical structure is needed to overcome a problem of the alternate state switching, which also presents a technical challenge when integrating most of the plurality of three-way valves and most of the plurality of four-way valves into a smaller number of multi-way valves.

At present, in order to enhance the endurance mileage of the pure electric vehicle, the thermal management design for the vehicle body requires an increasing number of operation conditions, leading to an increase in the number of thermal management members. In existing vehicle models, the thermal management members are each dispersedly arranged, occupying a large amount of layout space. Due to the dispersed arrangement of the thermal management members, a large number of cooling pipelines and a large number of air conditioning pipelines are needed to connect the thermal management members. The problems caused by a large number of cooling pipelines and a large number of air conditioning pipelines include: complicating the mechanical space and making it difficult to arrange, increasing costs, and adding to a heat leakage and flow resistance of the system.

### SUMMARY

In view of the above shortcomings in the prior art, an embodiment of the present disclosure is to provide an integrated valve core and a multi-way valve thereof, a valve pump apparatus, and a thermal management system for a vehicle body, which solves a problem of difficult integration of three-way valves and four-way valves and solves a problem that a plurality of three-way valves, a plurality of four-way valves, and corresponding pipelines in the management system for the vehicle body occupy an arrangement space in a vehicle. This design is highly integrated and compactly arranged, which can reduce a usage amount of cooling pipelines and a usage amount of air conditioning pipelines, thereby reducing the flow resistance and the heat leakage of the thermal management system.

In order to achieve the above embodiment, the present disclosure provides the following technical solutions.

Provided is an integrated valve core, including a valve core body. The valve core body has at least two docking regions at an end surface of the valve core body. The at least two docking regions are arranged in a circular array around an axis of the valve core body. Each of the at least two docking regions includes a conduction region and a cutoff region that are arranged in a circumferential direction of the valve core body. The conduction region penetrates in an axial direction of the valve core body, and the cutoff region is obstructive in the axial direction of the valve core body. For two adjacent docking regions of the at least two docking regions, the conduction region of one of the two adjacent docking regions is adjacent to the conduction region of another one of the two adjacent docking regions, or the cutoff region of one of the two adjacent docking regions is adjacent to the cutoff region of another one of the two adjacent docking regions.

In an embodiment, the at least two docking regions are an even number of docking regions and evenly divided into two groups of docking regions. In the circumferential direction of the valve core body, the conduction region is located in front of the cutoff region in each docking region of one of the two groups of docking regions, and the conduction region is located behind the cutoff region in each docking region of another one of the two groups of docking regions.

In an embodiment, the two groups of docking regions are symmetrically arranged relative to a diameter of the end surface of the valve core body. The one of the two groups of docking regions are located at a side of a symmetry line, and the other one group of the two groups of docking regions are located at another side of the symmetry line.

In an embodiment, the valve core body includes: a valve core member having eight docking apertures evenly distributed at an end surface of the valve core member in a circumferential direction of the valve core member, the valve core member having four connection channels, each of the four connection channels connecting two docking apertures of the eight docking apertures, and the two connected docking apertures being separated by one docking aperture; a first end cover connected to a first end of the valve core member; and a second end cover connected to a second end of the valve core member. The at least two docking regions are disposed at the second end cover, and each of the at least two docking regions corresponds to one docking aperture of the eight docking apertures.

In an embodiment, the eight docking apertures include four axial blind holes and four axial through holes that are formed on the valve core member. The four axial blind holes and the four axial through holes are alternately arranged in the circumferential direction of the valve core member. Two connection channels of the four connection channels connect two pairs of axial blind holes of the four axial blind holes, and another two connection channels of the four connection channels connect two pairs of axial through holes of the four axial through holes.

In an embodiment, the two connection channels that connect the two pairs of axial blind holes are located at a side of the valve core member close to the second end cover; and the two connection channels that connect the two pairs of axial through holes are located at a side of the valve core member close to the first end cover.

An integrated multi-way valve is further provided. The integrated multi-way valve includes: a valve core body having at least two docking regions at an end surface of the valve core body, the at least two docking regions being arranged in a circular array around an axis of the valve core body; and a valve seat disposed coaxially with the valve core body and rotatably relative to the valve core body. Each of the at least two docking regions includes a conduction region and a cutoff region that are arranged in a circumferential direction of the valve core body. The conduction region penetrates in an axial direction of the valve core body, and the cutoff region is obstructive in the axial direction of the valve core body. For two adjacent docking regions of the at least two docking regions, the conduction region of one of the two adjacent docking regions is adjacent to the conduction region of another one of the two adjacent docking regions, or the cutoff region of one of the two adjacent docking regions is adjacent to the cutoff region of another one of the two adjacent docking regions. The valve seat has at least two external connection apertures configured to rotationally switch the at least two docking regions. Each of at least one of the at least two external connection apertures is divided into two switching apertures that are arranged in a circumferential direction of the valve seat by a partition, and the two switching apertures divided by the external connection aperture are connected to a conduction region or a cutoff region of a corresponding docking region of at least two docking regions, respectively. When the valve core body and the valve seat relatively rotate until an arrangement of the conduction region and the cutoff region of adjacent docking regions of at least two docking regions changes, the two switching apertures are switchable between a conduction state and a cutoff state.

In an embodiment, during a mode switching of the integrated multi-way valve, a rotation angle of the valve core body relative to the valve seat is an integer multiple of a circumferential array angle between adjacent docking regions of at least two docking regions.

In an embodiment, the at least two docking regions are an even number of docking regions and evenly divided into two groups of docking regions. In the circumferential direction of the valve core body, the conduction region is located in front of the cutoff region in each docking region of one of the two groups of docking regions, and the conduction region is located behind the cutoff region in each docking region of another one of the two groups of docking regions; and the two groups of docking regions are symmetrically arranged relative to a diameter of the end surface of the valve core body. The one of the two groups of docking regions are located at a side of a symmetry line, and the other one group of the two groups of docking regions are located at another side of the symmetry line.

In an embodiment, the valve core body includes a valve core member, a first end cover connected to a first end of the valve core member, and a second end cover connected to a second end of the valve core member. The second end cover is uniformly divided into eight docking regions in a circumferential direction of the second end cover, and the valve core member has eight docking apertures evenly distributed at an end surface of the second end of the valve core member in the circumferential direction of the valve core member. Each of the eight docking apertures corresponds to one docking region of the eight docking regions. The valve core member has four connection channels. Each of the four connection channels connects two docking apertures of the eight docking apertures, the two connected docking apertures are separated by one docking aperture, and the valve seat has eight external connection apertures. Each of the eight external connection apertures corresponds to one docking region of the eight docking regions, and one of the eight external connection apertures is divided into two switching apertures, and the integrated multi-way valve is switchable between eight modes when the valve core body and the valve seat relatively rotate.

In an embodiment, seven external connection apertures of the eight external connection apertures are a first connection aperture, a second connection aperture, a third connection aperture, a fourth connection aperture, a fifth connection aperture, a sixth connection aperture, and an eighth connection aperture, respectively. The two switching apertures are a seventh connection aperture and a ninth connection aperture, respectively. The first connection aperture, the fifth connection aperture, the third connection aperture, the sixth connection aperture, the fourth connection aperture, the eighth connection aperture, the second connection aperture, the ninth connection aperture, and the seventh connection aperture are sequentially arranged in a first rotational direction of the valve core body (in a counterclockwise direction). A circumferential angle between two adjacent external connection apertures of the seven external connection apertures is 45°. The connection mode includes: a mode **a,** a mode **b,** a mode **c,** a mode **d,** a mode **e,** a mode **f,** a mode **g** and a mode **h.** The mode **a** is taken as an initial position: the first connection aperture is in communication with the second connection aperture, the fourth connection aperture is in communication with the third connection aperture, the fifth connection aperture is in communication with the sixth connection aperture, the eighth connection aperture is in communication with the seventh connection aperture, and the ninth connection aperture is cut off. The mode **b:** a valve core rotates by 45° reversely in the mode **a,** the first connection aperture is in communication with the second connection aperture, the fourth connection aperture is in communication with the third connection aperture, the fifth connection aperture is in communication with the seventh connection aperture, the eighth connection aperture is in communication with the sixth connection aperture, and the ninth connection aperture is cut off. The mode **c:** the valve core rotates by 225° reversely in the mode **a,** the first connection aperture is in communication with the second connection aperture, the fourth connection aperture is in communication with the third connection aperture, the eighth connection aperture is in communication with the sixth connection aperture, the fifth connection aperture is in communication with the ninth connection aperture, and the seventh connection aperture is cut off. The mode **d:** the valve core rotates by 90° reversely in the mode **a,** the first connection aperture is in communication with the third connection aperture, the fourth connection aperture is in communication with the second connection aperture, the eighth connection aperture is in communication with the sixth connection aperture, the fifth connection aperture is in communication with the seventh connection aperture, and the ninth connection aperture is cut off. The mode **e:** the valve core rotates by 270° reversely in the mode **a,** the first connection aperture is in communication with the third connection aperture, the fourth connection aperture is in communication with the second connection aperture, the eighth connection aperture is in communication with the sixth connection aperture, the fifth connection aperture is in communication with the ninth connection aperture, and the seventh connection aperture is cut off. The mode **f:** the valve core rotates by 180° reversely in the mode **a,** the first connection aperture is in communication with the second connection aperture, the fourth connection aperture is in communication with the third connection aperture, the fifth connection aperture is in communication with the sixth connection aperture, the eighth connection aperture is in communication with the ninth connection aperture, and the seventh connection aperture is cut off. The mode **g:** the valve core rotates by 135° reversely in the mode **a,** the first connection aperture is in communication with the third connection aperture, the fourth connection aperture is in communication with the second connection aperture, the fifth connection aperture is in communication with the sixth connection aperture, the eighth connection aperture is in communication with the ninth connection aperture, and the seventh connection aperture is cut off. The mode **h:** the valve core rotates by 315° reversely in the mode **a,** the first connection aperture is in communication with the third connection aperture, the fourth connection aperture is in communication with the second connection aperture, the fifth connection aperture is in communication with the sixth connection aperture, the eighth connection aperture is in communication with the seventh connection aperture, and the ninth connection aperture is cut off.

In an embodiment, the external connection aperture is provided with a radial reinforcing rib at a middle part of the external connection aperture.

In an embodiment, the integrated multi-way valve further includes: a valve cover configured to, in cooperation with the valve seat, mount the valve core body; and a drive mechanism disposed at the valve cover. The drive mechanism is configured to drive the valve core body to rotate relative to the valve seat.

In an embodiment, the integrated multi-way valve further includes a first sealing pad disposed between the second end cover and the valve seat. The first sealing pad has an opening corresponding to the external connection aperture.

In an embodiment, each of the external connection apertures is divided into two switching apertures. The two switching apertures divided by the external connection aperture are connected to a conduction region or a cutoff region of a corresponding docking region of at least two docking regions, respectively.

An integrated valve pump apparatus is further provided. The integrated valve pump apparatus includes the integrated multi-way valve as described above and a double-layer flow integrated plate. The integrated multi-way valve is mounted at the double-layer flow integrated plate. The double-layer flow integrated plate is further mounted with a motor pump assembly, a battery pump assembly, a three-way proportional valve assembly, and a plurality of pipeline interfaces. The double-layer flow integrated plate has a plurality of hole channels formed therein. The plurality of hole channels cooperate with the integrated multi-way valve, the motor pump assembly, the battery pump assembly, the three-way proportional valve, and the plurality of pipeline interfaces to form a waterway connection channel.

In an embodiment, the double-layer flow integrated plate includes an integrated plate body, a first end plate, and a second end plate. The first end plate and the second end plate are fixedly connected to two end surfaces of the integrated plate body, respectively. Two sides of the integrated plate body are provided with a motor pump assembly and a battery pump assembly, respectively. The integrated plate body has several pipeline interfaces of the plurality of pipeline interfaces formed on a top surface of the integrated plate body. The integrated plate body has several hole channels of the plurality of hole channels formed thereon. The integrated multi-way valve is mounted on the first end plate. The first end plate has a positioning hole engaged with an external connection aperture. The three-way proportional valve assembly is mounted on the second end plate. The second end plate has several pipeline interfaces of the plurality of pipeline interfaces formed thereon.

In an embodiment, the integrated plate body has a first hole channel and a second hole channel at a middle part of the integrated plate body. The first hole channel has a fifth hole channel at a lower side of the first hole channel. The second hole channel has a third hole channel at a lower side of the second hole channel. A fourth hole channel is formed between the third hole channel and the fifth hole channel. A sixth hole channel is formed at a side of the integrated plate body connected to the motor pump assembly and is in communication with each of the first hole channel and the motor pump assembly. A seventh hole channel is formed at a side of the integrated plate body connected to the battery pump assembly and is in communication with each of the second hole channel and the battery pump assembly. Three three-way valve hole channels are formed at an upper side of each of the first hole channel and the second hole channel. Two ends of each of the first hole channel, the second hole channel, the third hole channel, the fourth hole channel, and the fifth hole channel are in communication with the positioning hole and the plurality of pipeline interfaces, respectively. Two ends of each of the three three-way valve hole channels are in communication with the positioning hole and the three-way proportional valve assembly, respectively, and two three-way valve hole channels of the three three-way valve hole channels are in communication with two pipeline interfaces of the plurality of pipeline interfaces located on the top surface of the integrated plate body.

In an embodiment, the second end plate has a first pipeline interface, a second pipeline interface, a third pipeline interface, a fourth pipeline interface, a fifth pipeline interface, and a sixth pipeline interface that are matched with the first hole channel, the second hole channel, the third hole channel, the fourth hole channel, the fifth hole channel, and the sixth hole channel, respectively; and the integrated plate body has a seventh pipeline interface, an eighth pipeline interface, a ninth pipeline interface, and a tenth pipeline interface that are formed on the top surface of the integrated plate body. The seventh pipeline interface is in communication with the sixth hole channel. The eighth pipeline interface is in communication with the seventh hole channel, and the ninth pipeline interface and the tenth pipeline interface are in communication with the two three-way valve hole channels, respectively.

In an embodiment, two sides of the integrated plate body are provided with a motor pump mounting seat and a battery pump mounting seat, respectively. The motor pump assembly is mounted on the motor pump mounting seat. The battery pump assembly is mounted on the battery pump mounting seat. The motor pump mounting seat has a motor pump pipeline interface formed thereon. The battery pump mounting seat has a battery pump pipeline interface formed thereon.

A thermal management system for a vehicle body is further provided. The system includes the integrated multi-way valve having modes **a** to **h,** and further includes a battery pack circulation loop, a rear air conditioning loop, a motor loop, and a thermal management loop. The thermal management loop may heat or cool a battery pack, a motor, or a rear air conditioner by mode switching. Thermal management modes of the thermal management system for the vehicle body are switchable based on a multi-way valve connection mode.

In an embodiment, the thermal management system for the vehicle body includes: a first thermal management mode, a second thermal management mode, a third thermal management mode, a fourth thermal management mode, a fifth thermal management mode, and a sixth thermal management mode. The first thermal management mode: the battery pack circulation loop is in communication with the thermal management loop, and the rear air conditioning loop is in communication with the motor loop, for cooling a battery. The second thermal management mode: the battery pack circulation loop is connected in series with the thermal management loop, the rear air conditioning loop, and the motor loop, for cooling a battery. The third thermal management mode: the battery pack circulation loop is connected in series with the thermal management loop, the rear air conditioning loop, and the motor loop, for heating the battery. The fourth thermal management mode: the thermal management loop is in communication with the motor loop, the rear air conditioning loop is in communication with the battery pack loop, and a water tank and a motor absorb heat for heating. The fifth thermal management mode: the thermal management loop is in communication with the motor loop, the rear air conditioning loop is in communication with the battery pack loop, and only the motor absorbs heat for heating. The sixth thermal management mode: the thermal management loop is in communication with the battery pack circulation loop, the rear air conditioning loop is in communication with the motor loop, the motor stores heat, and the battery exchanges heat with the thermal management loop.

In an embodiment, the first thermal management mode, the second thermal management mode, the third thermal management mode, the fourth thermal management mode, the fifth thermal management mode, and the sixth thermal management mode correspond to the mode **a;** the mode **b;** the mode **c;** the mode **d;** the mode **e,** and the mode **f** sequentially.

In an embodiment, the thermal management system for the vehicle body further includes two reservation modes corresponding to the mode **g** and the mode **h,** respectively.

In summary, beneficial effects of the integrated valve core and the multi-way valve thereof, the valve pump system, and the thermal management system for the vehicle body in the present disclosure are described below.

First, through an arrangement and layout of the conduction region and the cutoff region in the docking region in the valve core, when there are two external channels needing to perform alternate state switching between conduction and cutoff, the valve core has a structural foundation for realizing alternate state switching.

Second, through the arrangement and layout of the conduction region and the cutoff region in the docking region in the valve core, while the valve seat is correspondingly designed with at least one group of switching apertures, two switching apertures in one group of switching apertures are docked with the conduction region and the cutoff region of the docking region during rotation of the valve core. When corresponding arrangement directions of the conduction region and the cutoff region change, switching between conduction and cutoff of the two switching apertures is realized, and the switching structure may be applied to integration of various multi-way valves.

Third, the integrated valve pump apparatus has a high integration degree. The integrated valve pump apparatus is used to form the waterway connection channel, which can reduce a usage amount of valves and a usage amount of pipelines, lighten weights, and decrease the space occupied by the layout, thereby reducing the flow resistance and the heat leakage of the thermal management system, and achieving the purposes of high efficiency and energy saving.

Fourth, by adopting the integrated multi-way valve or the integrated valve pump apparatus, the thermal management system for the vehicle body may reduce the number of valves and pipelines, lighten the weights, decrease the space occupied by the layout, while also ensure corresponding conversion through switching of different modes of the multi-way valve, making switching modes more diverse, thereby satisfying more designs for thermal management operation conditions for the vehicle body.

### BRIEF DESCRIPTION OF THE DRAWINGS

In order to clearly explain technical solutions of the embodiments of the present disclosure or in the prior art, accompanying drawings used in the description of the embodiments or the prior art are briefly described below. Obviously, the accompanying drawings as described below are merely some embodiments of the present disclosure. Based on these drawings, other accompanying drawings may be obtained by those of ordinary skill in the art without creative efforts.
FIG. 1 is a schematic arrangement view of a conduction region and a cutoff region on a valve core body according to a first embodiment of the present disclosure.
FIG. 2 is a schematic arrangement view of one of a conduction region and a cutoff region on a valve core body according to a first embodiment of the present disclosure.
FIG. 3 is a schematic arrangement view of one of a conduction region and a cutoff region on a valve core body according to a first embodiment of the present disclosure.
FIG. 4 is a schematic arrangement view of one of a conduction region and a cutoff region on a valve core body according to a first embodiment of the present disclosure.
FIG. 5 is an exploded view of an integrated valve core according to a first embodiment of the present disclosure.
FIG. 6 is a perspective view of a valve core member in FIG. 5 from a front viewing angle.
FIG. 7 is a perspective view of a valve core member in FIG. 5 from a rear viewing angle.
FIG. 8 is an exploded view of an integrated multi-way valve according to a second embodiment of the present disclosure.
FIG. 9 is a front view of a surface on which an external connection aperture is located in a valve seat according to a second embodiment of the present disclosure.
FIG. 10 is a front view of a surface on which an external connection aperture is located after a reinforcing rib is provided in a valve seat according to a second embodiment of the present disclosure.
FIG. 11 is a schematic diagram of connection modes of an external connection aperture of an integrated multi-way valve according to a second embodiment of the present disclosure (where ① is a first docking aperture, ② is a second docking aperture, ③ is a third docking aperture, ④ is a fourth docking aperture, ⑤ is a fifth docking aperture, ⑥ is a sixth docking aperture, ⑦ is a seventh docking aperture, ⑧ is an eighth docking aperture, and ⑨ is a ninth docking aperture).
FIG. 12 is a diagram of a thermal management system for a vehicle body in a first thermal management mode according to a fourth embodiment of the present disclosure.
FIG. 13 is a diagram of a thermal management system for a vehicle body in a second thermal management mode according to a fourth embodiment of the present disclosure.
FIG. 14 is a diagram of a thermal management system for a vehicle body in a third management mode according to a fourth embodiment of the present disclosure.
FIG. 15 is a diagram of a thermal management system for a vehicle body in a fourth thermal management mode according to a fourth embodiment of the present disclosure.
FIG. 16 is a diagram of a thermal management system for a vehicle body in a fifth thermal management mode according to a fourth embodiment of the present disclosure.
FIG. 17 is a diagram of a thermal management system for a vehicle body in a sixth thermal management mode according to a fourth embodiment of the present disclosure.
FIG. 18 is a schematic structural view of sixteen-way of an integrated multi-way valve according to a fifth embodiment of the present disclosure.
FIG. 19 is a schematic structural view of an integrated valve pump apparatus according to a third embodiment of the present disclosure.
FIG. 20 is a schematic structural view of a double-layer flow integrated plate according to a third embodiment of the present disclosure.
FIG. 21 is an exploded structure view of a double-layer flow integrated plate according to a third embodiment of the present disclosure.
FIG. 22 is a rear view of a double-layer flow integrated plate according to a third embodiment of the present disclosure.

In the drawings: 1, valve core body; 1-1, valve core member; 1-2, first end cover; 1-3, second end cover; 2, axial blind hole; 3, axial through hole; 4, connection channel; 5, docking region; 5-1, conduction region; 5-2, cutoff region; 6-1, valve seat; 6-2, valve cover; 6-3, drive mechanism; 6-4, first sealing pad; 6-5, second sealing pad; 7, driven member; 8, external connection aperture; 9, switching aperture; 10, reinforcing ribs; 11, partition; 12, battery pack circulation loop; 13, rear air conditioning loop; 14, motor loop; 15,thermal management loop; 16, double-layer flow integrated plate; 16-1, integrated plate body; 16-2, first end plate; 16-3, second end plate; 16-4, motor pump mounting seat; 16-5, battery pump mounting seat; 16-6, motor pump pipeline interface; 16-7, battery pump pipeline interface; 16-8, positioning hole; 17, motor pump assembly; 18, battery pump assembly; 19, three-way proportional valve assembly; 20, pipeline interface; 20-1, first pipeline interface; 20-2, second pipeline interface; 20-3, third pipeline interface; 20-4, fourth pipeline interface; 20-5, fifth pipeline interface; 20-6, sixth pipeline interface; 20-7, seventh pipeline interface; 20-8, eighth pipeline interface; 20-9, ninth pipeline interface; 20-10, tenth pipeline interface; 21, hole channel; 21-1, first hole channel; 21-2, second hole channel; 21-3, third hole channel; 21-4, fourth hole channel; 21-5, fifth hole channel; 21-6, sixth hole channel; 21-7, seventh hole channel; 21-8, three three-way valve hole channel.

### DETAILED DESCRIPTION

Implementations of the present disclosure will be described below with specifically concrete examples, and other advantages and effects of the present disclosure will be readily apparent to those skilled in the art from contents disclosed in this specification. The present disclosure can also be embodied or applied through other different specific implementations, and various details in this specification can also be modified or changed based on different viewpoints and applications without departing from the spirit of the present disclosure. It should be noted that, the following embodiments and features in the embodiments can be combined with each other without mutual contradiction. It should also be understood that terms used in the embodiments of the present disclosure are intended to describe specifically concrete implementations rather than to limit the protection scope of the present disclosure. Test methods for which no specific conditions are indicated in the following embodiments are generally under conventional conditions or conditions recommended by manufacturers.

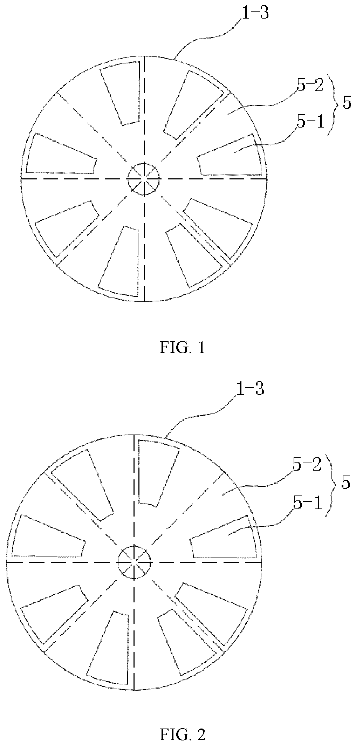

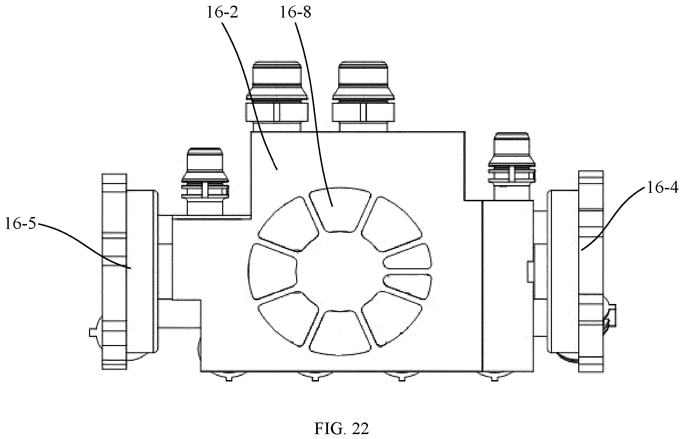

Referring to FIG. 1 and FIG. 22, it should be noted that structures, proportions, sizes, and the like illustrated in the accompanying drawings of this specification are only used for matching the contents disclosed in the specification, to allow those skilled in the art to understand and read, rather than to define limiting conditions enforceable by the present disclosure, and therefore, have no technically substantive significance. Any structural modification, proportional relationship change, or size adjustment should still fall within the scope coverable in the technical contents disclosed in the present disclosure without affecting producible effects and achievable objects by the present disclosure. Meanwhile, terms such as "over", "below", "left", "right", "middle", and "one" mentioned in this specification are merely for convenience of description, rather than to limit the scope enforceable by the present disclosure. Changes or adjustments in relative relationships of the terms are also regarded as a range enforceable by the present disclosure without substantial changes of the technical contents.

When the embodiments provide numerical ranges, it should be understood that, unless otherwise stated in the present disclosure, two endpoints in each numerical range and any numerical value between the two endpoints may be selected. Unless otherwise defined, except for all technical and scientific terms used in the present disclosure and knowledge of the prior art and description of the present disclosure by those skilled in the art, any method, device, and material of the prior art similar or equivalent to those described in the embodiments of the present disclosure can be used to realize the present disclosure.

### First embodiment

This embodiment illustrates an integrated valve core, including a valve core body 1 having at least two docking regions 5 at an end surface of the valve core body 1. The at least two docking regions 5 are arranged in a circular array around an axis of the valve core body 1. The docking region 5 is not limited to region division of the embodiment. For example, there is a spacing between the docking regions 5, or the docking regions 5 are equally divided into a plurality of docking regions 5 in a circumferential direction of the valve core body 1.

In detail, the embodiment is specifically described using an arrangement of eight docking regions 5.

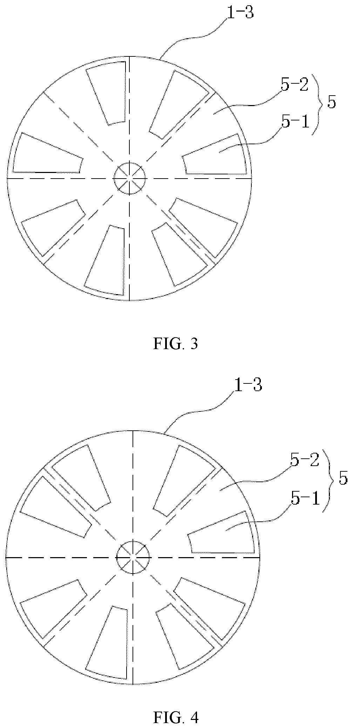

Referring to FIG. 1, each docking region 5 includes a conduction region 5-1 and a cutoff region 5-2 that are arranged in the circumferential direction of the valve core body 1. The conduction region 5-1 penetrates in an axial direction of the valve core body 1, and the cutoff region 5-2 is obstructive in the axial direction of the valve core body 1. For two adjacent docking regions 5 of the at least two docking regions 5, the conduction region 5-1 of one of the two adjacent docking regions 5 is adjacent to the conduction region 5-1 of another one of the two adjacent docking regions 5, or the cutoff region 5-2 of one of the two adjacent docking regions 5 is adjacent to the cutoff region 5-2 of another one of the two adjacent docking regions 5, i.e., there are but are not limited to, as illustrated in FIG. 1 to FIG. 3, one group of two adjacent conduction regions 5-1 and one group of two adjacent cutoff regions 5-2, or as illustrated in FIG. 4, two group of two adjacent cutoff regions 5-2 and two group of two adjacent conduction regions 5-1.

In more detail, the docking regions 5 are evenly divided into two groups of docking regions 5. In the circumferential direction of the valve core body 1, the conduction region 5-1 is located in front of the cutoff region 5-2 in each docking region 5 of one of the two groups of docking regions 5, and the conduction region 5-1 is located behind the cutoff region 5-2 in each docking region 5 of another one of the two groups of docking regions 5. The two groups of docking regions 5 are symmetrically arranged relative to a diameter of the end surface of the valve core body 1. The one of the two groups of docking regions 5 are located at a side of a symmetry line, and the other one group of the two groups of docking regions 5 are located at another side of the symmetry line.

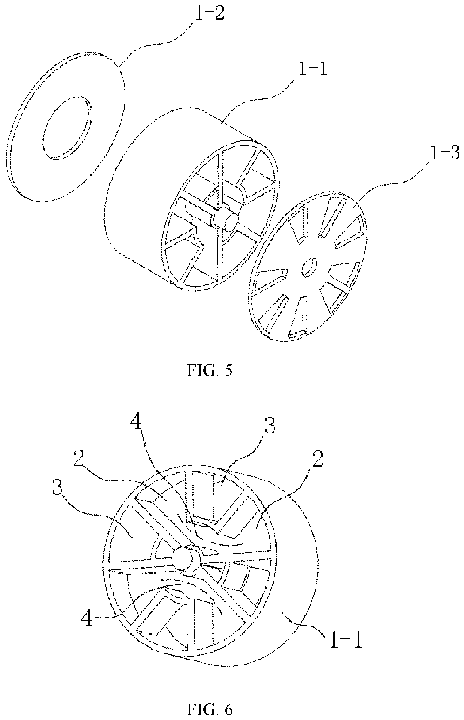

In more detail, further description is performed based on the eight docking regions 5 illustrated in FIG. 1 in combination with the valve core body 1 illustrated in FIG. 5 to FIG. 7.

Referring to FIG. 1 and FIG. 5 to FIG. 7, the illustrated integrated valve core includes a valve core body 1, and the valve core body 1 includes a valve core member 1-1, a first end cover 1-2 connected to a first end of the valve core member 1-1, and a second end cover 1-3 connected to a second end of the valve core member 1-1. The valve core member 1-1 has eight docking apertures evenly distributed at an end surface of the valve core member 1-1 in a circumferential direction of the valve core member 1-1. The docking region 5 is disposed at the second end cover 1-3. Each docking region 5 corresponds to one docking aperture of the eight docking apertures. The valve core member 1-1 has four connection channels 4.

Referring to FIG. 5 to FIG. 7, the eight docking apertures include four axial blind holes 2 and four axial through holes 3 that are formed on the valve core member 1-1. The four axial blind holes 2 and the four axial through holes 3 are alternately arranged in the circumferential direction of the valve core member 1-1. Two connection channels 4 of the four connection channels 4 connect two pairs of axial blind holes of the four axial blind holes 2, and another two connection channels 4 of the four connection channels 4 connect two pairs of axial through holes of the four axial through holes 3. The connected two blind holes are separated by one through hole. The connected two through holes are separated by one blind hole. The two connection channels 4 that connect the two pairs of axial blind holes 2 are located at a side of the valve core member 1-1 close to the second end cover 1-3. The two connection channels 4 that connect the two pairs of axial through holes 3 are located at a side of the valve core member 1-1 close to the first end cover 1-2.

### Second embodiment

This embodiment illustrates an integrated multi-way valve, which is specifically described using an integrated valve core illustrated in FIG. 1 and FIG. 5 in combination with a valve seat 6-1 having eight external docking apertures.

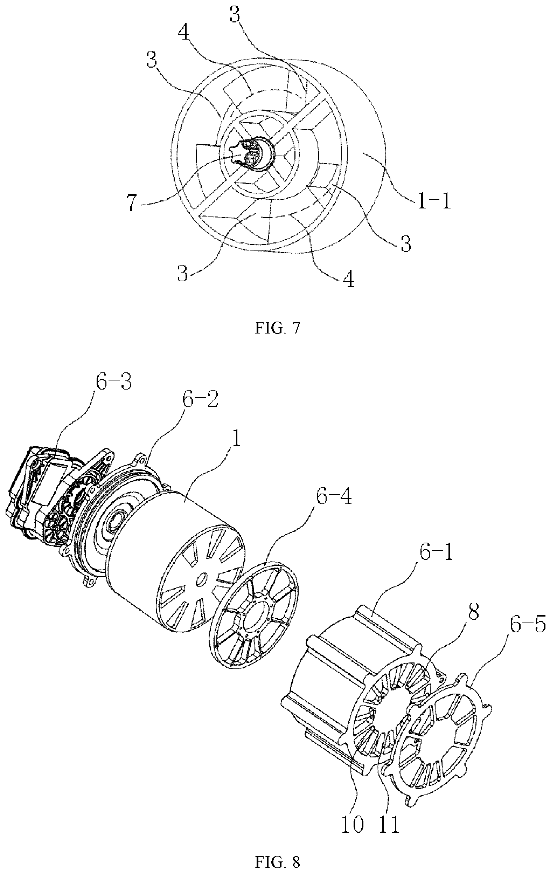

Referring to FIG. 8, provided is an integrated multi-way valve, including a valve core body 1, a valve seat 6-1, a valve cover 6-2 configured to, in cooperation with the valve seat 6-1, mount the valve core body 1, and a drive mechanism 6-3 disposed at the valve cover 6-2. The drive mechanism 6-3 is configured to drive a valve core to rotate relative to the valve seat 6-1. The valve core body 1 includes a valve core member 1-1, a first end cover 1-2 connected to a first end of the valve core member 1-1, and a second end cover 1-3 connected to a second end of the valve core member 1-1. The valve core member 1-1 is provided with a driven member 7 at a middle part of the valve core member 1-1, and the driven member 7 cooperates with the drive mechanism 6-3.

Referring to FIG. 1 and FIG. 5 to FIG. 7, the valve core member 1-1 has eight docking apertures evenly distributed at an end surface of the valve core member 1-1 in the circumferential direction of the valve core member 1-1. A docking region 5 is disposed at the second end cover 1-3. Each docking region 5 corresponds to one docking aperture. The valve core member 1-1 has four connection channels 4. The eight docking apertures include four axial blind holes 2 and four axial through holes 3 that are formed on the valve core member 1-1. The four axial blind holes 2 and the four axial through holes 3 are alternately arranged in the circumferential direction of the valve core member 1-1. Two connection channels 4 of the four connection channels 4 connect two pairs of axial blind holes of the four axial blind holes 2, and another two connection channels 4 of the four connection channels 4 connect two pairs of axial through holes of the four axial through holes 3. The connected two blind holes are separated by one through hole. The connected two through holes are separated by one blind hole. The two connection channels 4 that connect the two pairs of axial blind holes 2 are located at a side of the valve core member 1-1 close to the second end cover 1-3. The two connection channels 4 that connect the two pairs of axial through holes 3 are located at a side of the valve core member 1-1 close to the first end cover 1-2.

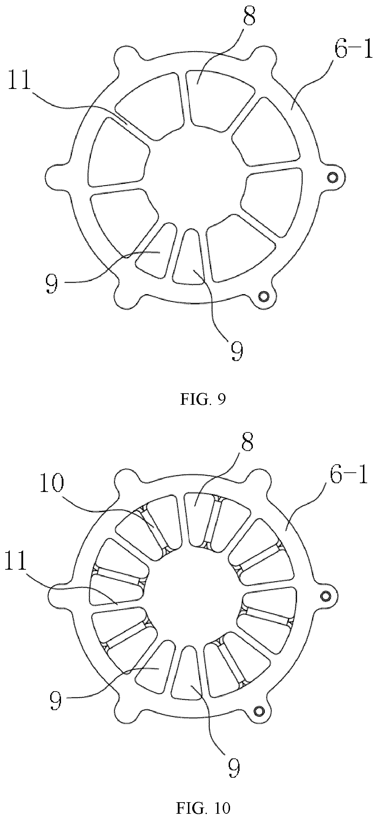

Referring to FIG. 8 and FIG. 9, the valve seat 6-1 is disposed coaxially with a valve core and rotatably relative to the valve core. The valve seat 6-1 has eight external connection apertures 8 for rotational switching with the docking region 5. Each of the external connection apertures 8 corresponds to one docking region 5. One of the eight external connection apertures 8 is divided into two switching apertures 9 that are arranged in a circumferential direction of the valve seat 6-1 by a partition 11. The two switching apertures 9 divided by the external connection aperture 8 are connected to a conduction region 5-1 or a cutoff region 5-2 of a corresponding docking region 5, respectively. In addition, the number of external connection apertures 8 may be smaller than the number of docking regions 5, as long as it can be realized that the switching aperture 9 is switchable between a conduction state and a cutoff state when the valve core and the valve seat 6-1 relatively rotate until an arrangement of the conduction region 5-1 and the cutoff region 5-2 of adj acent docking regions of at least two docking regions 5 changes..

Referring to FIG. 8, the integrated multi-way valve further includes a first sealing pad 6-4 and a second sealing pad 6-5. The first sealing pad 6-4 is disposed between the second end cover 1-3 and the valve seat 6-1. The second sealing pad 6-5 is disposed at an outer end surface of the integrated multi-way valve. Each of the first sealing pad 6-4 and the second sealing pad 6-5 has an opening corresponding to the external connection aperture 8.

Referring to FIG. 10, the external connection aperture 8 is internally provided with a radial reinforcing rib 10.

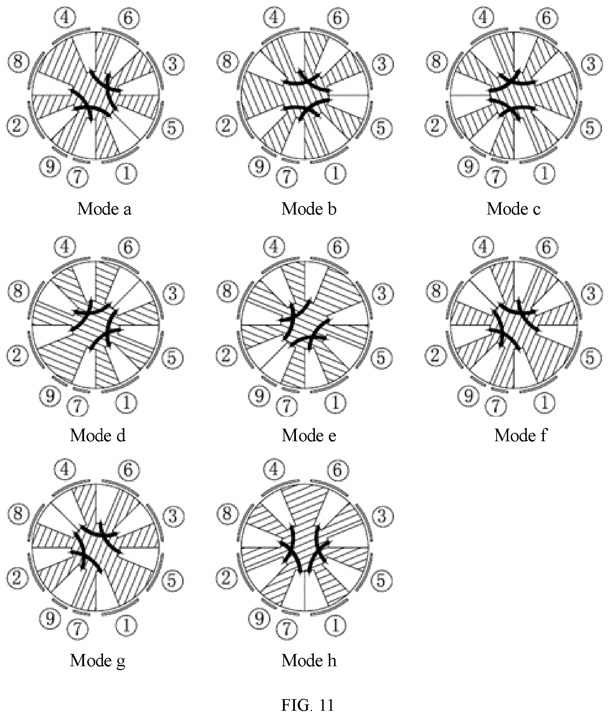

Referring to FIG. 11, seven external connection apertures 8 are a first connection aperture, a second connection aperture, a third connection aperture, a fourth connection aperture, a fifth connection aperture, a sixth connection aperture, and an eighth connection aperture, respectively, and the two switching apertures 9 are a seventh connection aperture and a ninth connection aperture, respectively. The first connection aperture, the fifth connection aperture, the third connection aperture, the sixth connection aperture, the fourth connection aperture, the eighth connection aperture, the second connection aperture, the ninth connection aperture, and the seventh connection aperture are sequentially arranged in a counterclockwise direction of the valve core. A circumferential angle between two adjacent external connection apertures 8 is 45°. The integrated multi-way valve is switchable between eight modes when the valve core body 1 and the valve seat 6-1 relatively rotate. Details are described below.

Referring to FIG. 11, a mode a is taken as an initial position, i.e., the first connection aperture is in communication with the second connection aperture, the fourth connection aperture is in communication with the third connection aperture, the fifth connection aperture is in communication with the sixth connection aperture, the eighth connection aperture is in communication with the seventh connection aperture, and the ninth connection aperture is cut off.

Referring to FIG. 11, a mode b includes rotating by 45° anticlockwise relative to the mode a, i.e., the first connection aperture is in communication with the second connection aperture, the fourth connection aperture is in communication with the third connection aperture, the fifth connection aperture is in communication with the seventh connection aperture, the eighth connection aperture is in communication with the sixth connection aperture, and the ninth connection aperture is cut off.

Referring to FIG. 11, a mode c includes rotating by 225° anticlockwise relative to the mode a, i.e., the first connection aperture is in communication with the second connection aperture, the fourth connection aperture is in communication with the third connection aperture, the eighth connection aperture is in communication with the sixth connection aperture, the fifth connection aperture is in communication with the ninth connection aperture, and the seventh connection aperture is cut off.

Referring to FIG. 11, a mode **d** includes rotating by 90° anticlockwise relative to the mode a, i.e., the first connection aperture is in communication with the third connection aperture, the fourth connection aperture is in communication with the second connection aperture, the eighth connection aperture is in communication with the sixth connection aperture, the fifth connection aperture is in communication with the seventh connection aperture, and the ninth connection aperture is cut off.

Referring to FIG. 11, a mode e includes rotating by 270° anticlockwise relative to the mode **a,** i.e., the first connection aperture is in communication with the third connection aperture, the fourth connection aperture is in communication with the second connection aperture, the eighth connection aperture is in communication with the sixth connection aperture, the fifth connection aperture is in communication with the ninth connection aperture, and the seventh connection aperture is cut off.

Referring to FIG. 11, a mode **f** includes rotating by 180° anticlockwise relative to the mode **a,** i.e., the first connection aperture is in communication with the second connection aperture, the fourth connection aperture is in communication with the third connection aperture, the fifth connection aperture is in communication with the sixth connection aperture, the eighth connection aperture is in communication with the ninth connection aperture, and the seventh connection aperture is cut off.

Referring to FIG. 11, a mode **g** includes rotating by 135° anticlockwise relative to the mode **a,** i.e., the first connection aperture is in communication with the third connection aperture, the fourth connection aperture is in communication with the second connection aperture, the fifth connection aperture is in communication with the sixth connection aperture, the eighth connection aperture is in communication with the ninth connection aperture, and the seventh connection aperture is cut off.

Referring to FIG. 11, a mode **h** includes rotating by 315° anticlockwise relative to the mode **a,** i.e., the first connection aperture is in communication with the third connection aperture, the fourth connection aperture is in communication with the second connection aperture, the fifth connection aperture is in communication with the sixth connection aperture, the eighth connection aperture is in communication with the seventh connection aperture, and the ninth connection aperture is cut off.

### Third embodiment

This embodiment illustrates an integrated valve pump apparatus, including the integrated multi-way valve 6 described in the second embodiment and a double-layer flow integrated plate 16.

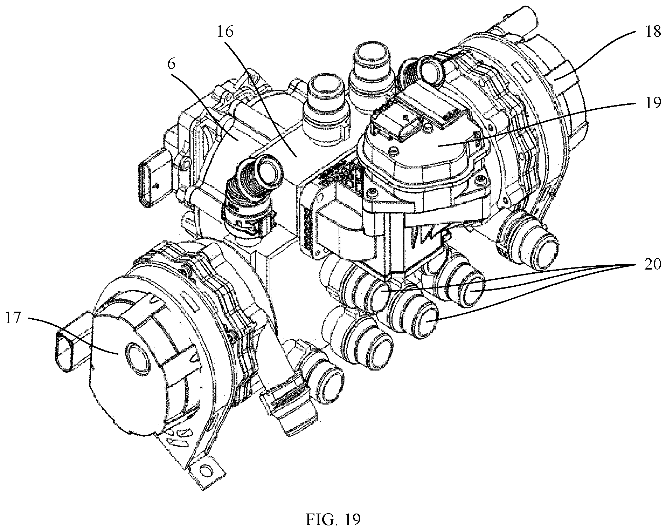

Referring to FIG. 19, the integrated multi-way valve 6 is mounted at the double-layer flow integrated plate 16. The double-layer flow integrated plate 16 is further mounted with a motor pump assembly 17, a battery pump assembly 18, a three-way proportional valve assembly 19, and a plurality of pipeline interfaces 20. The double-layer flow integrated plate 16 has a plurality of hole channels 21 formed therein. The plurality of hole channels 21 cooperate with the integrated multi-way valve 6, the motor pump assembly 17, the battery pump assembly 18, the three-way proportional valve 19, and the plurality of pipeline interfaces 20 to form a waterway connection channel.

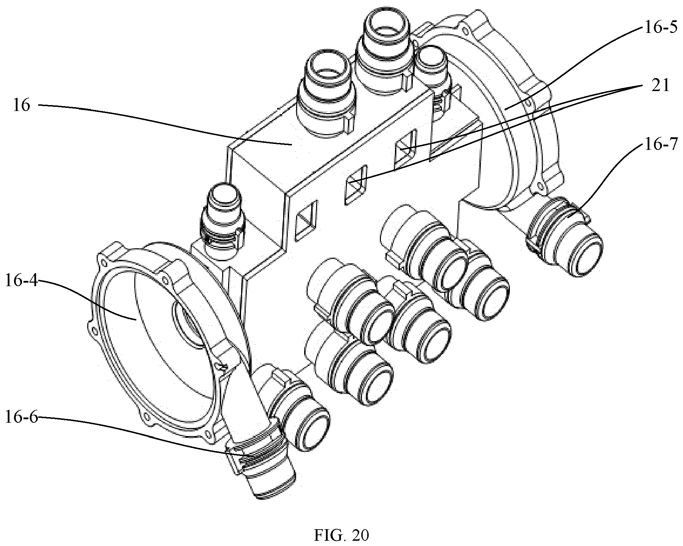

Referring to FIG. 20 to FIG. 22, the double-layer flow integrated plate 16 includes an integrated plate body 16-1, a first end plate 16-2, and a second end plate 16-3. The first end plate 16-2 and the second end plate 16-3 are fixedly connected to two end surfaces of the integrated plate body 16-1, respectively. Two sides of the integrated plate body 16-1 are provided with a motor pump assembly 17 and a battery pump assembly 18, respectively. The integrated plate body 16-1 has several pipeline interfaces 20 of the plurality of pipeline interfaces 20 formed on a top surface of the integrated plate body 16-1. The integrated plate body 16-1 has several hole channels 21 of the plurality of hole channels 21 formed thereon. The integrated multi-way valve 6 is mounted on the first end plate 16-2. The first end plate 16-2 has a positioning hole 16-8 engaged with the external connection aperture 8. The three-way proportional valve assembly 19 is mounted on the second end plate 16-3. The second end plate 16-3 has several pipeline interfaces 20 of the plurality of pipeline interfaces 20 formed thereon. The first end plate 16-2 and the second end plate 16-3 are fixedly connected to the integrated plate body 16-1 by hot plate welding. The positioning hole 16-8 has a shape and distribution that are the same as a shape and distribution of the external connection aperture 8, thereby ensuring that a relative mounting position of the integrated multi-way valve 6 is fixed.

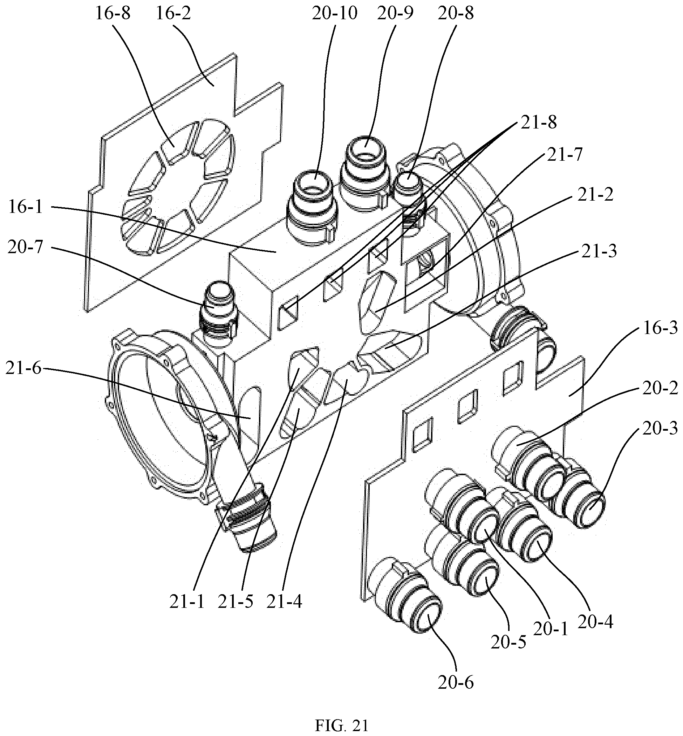

Referring to FIG. 21, the integrated plate body 16-1 has a first hole channel 21-1 and a second hole channel 21-2 at a middle part of the integrated plate body 16-1. The first hole channel 21-1 has a fifth hole channel 21-5 at a lower side of the first hole channel 21-1. The second hole channel 21-2 has a third hole channel 21-3 at a lower side of the second hole channel 21-2. A fourth hole channel 21-4 is formed between the third hole channel 21-3 and the fifth hole channel 21-5. A sixth hole channel 21-6 is formed at a side of the integrated plate body 16-1 connected to the motor pump assembly 17 and is in communication with each of the first hole channel 21-1 and the motor pump assembly 17. A seventh hole channel 21-7 is formed at a side of the integrated plate body 16-1 connected to the battery pump assembly 18 and is in communication with each of the second hole channel 21-2 and the battery pump assembly 18. Three three-way valve hole channels 21-8 are formed at an upper side of each of the first hole channel 21-1 and the second hole channel 21-2. Two ends of each of the first hole channel 21-1, the second hole channel 21-2, the third hole channel 21-3, the fourth hole channel 21-4, and the fifth hole channel 21-5 are in communication with the positioning hole 16-8 and the plurality of pipeline interfaces 20, respectively. Two ends of each of the three three-way valve hole channels 21-8 are in communication with the positioning hole 16-8 and the three-way proportional valve assembly 19, respectively. Two three-way valve hole channels 21-8 of the three three-way valve hole channels 21-8 are in communication with two pipeline interfaces 20 of the plurality of pipeline interfaces 20 located on the top surface of the integrated plate body 16-1.

Referring to FIG. 20 and FIG. 21, the second end plate 16-3 has a first pipeline interface 20-1, a second pipeline interface 20-2, a third pipeline interface 20-3, a fourth pipeline interface 20-4, a fifth pipeline interface 20-5, and a sixth pipeline interface 20-6 that are matched with the first hole channel 21-1, the second hole channel 21-2, the third hole channel 21-3, the fourth hole channel 21-4, the fifth hole channel 21-5, and the sixth hole channel 21-6, respectively. The integrated plate body 16-1 has a seventh pipeline interface 20-7, an eighth pipeline interface 20-8, a ninth pipeline interface 20-9, and a tenth pipeline interface 20-10 that are formed on the top surface of the integrated plate body 16-1. The seventh pipeline interface 20-7 is in communication with the sixth hole channel 21-6. The eighth pipeline interface 20-8 is in communication with the seventh hole channel 21-7. The ninth pipeline interface 20-9 and the tenth pipeline interface 20-10 are in communication with the two three-way valve hole channels 21-8, respectively.

The first pipeline interface 20-1 is connected to a pipeline to a Radiator. The sixth pipeline interface 20-6 is connected to a pipeline from the Radiator. The second pipeline interface 20-2 is connected to a pipeline from a Battery (a battery pack). The third pipeline interface 20-3 is connected to a pipeline to a PTC (an air conditioning heat source). The fourth pipeline interface 20-4 is connected to a pipeline from a Chiller (a cooling device). The fifth pipeline interface 20-5 is connected to a pipeline from a Motor. The seventh pipeline interface 20-7 is connected to a pipeline from a Tank (a water tank). The eighth pipeline interface 20-8 is connected to a pipeline to the Tank (the water tank). The ninth pipeline interface 20-9 is connected to a pipeline from an LCC (a lane centering assist system). The tenth pipeline interface 20-10 is connected to a pipeline to the LCC (the lane centering assist system).

Referring to FIG. 19 and FIG. 20, the two sides of the integrated plate body 16-1 are provided with a motor pump mounting seat 16-4 and a battery pump mounting seat 16-5, respectively. The motor pump assembly 17 is mounted on the motor pump mounting seat 16-4. The battery pump assembly 18 is mounted on the battery pump mounting seat 16-5. The motor pump mounting seat 16-4 has a motor pump pipeline interface 16-6 formed thereon. The battery pump mounting seat 16-5 has a battery pump pipeline interface 16-7 formed thereon. The motor pump mounting seat 16-4 is in communication with the sixth hole channel 21-6, and the battery pump mounting seat 16-5 is in communication with the seventh hole channel 21-7. Each of the motor pump assembly 17 and the battery pump assembly 18 is provided with a fixed suspension device for mounting of the integrated valve pump apparatus. Of course, the integrated valve pump apparatus may also be mounted through a fixed bracket or other devices.

### Fourth embodiment

This embodiment illustrates a thermal management system for a vehicle body, including the integrated multi-way valve with modes **a** to **h** as described according to the second embodiment or the integrated valve pump apparatus as described according to the third embodiment. The thermal management system for the vehicle body further includes a battery pack circulation loop 12, a rear air conditioning loop 13, a motor loop 14, and a thermal management loop 15. The thermal management loop 15 may heat or cool a battery pack or a motor or a rear air conditioner through mode switching. Thermal management modes of the thermal management system for the vehicle body are switchable based on a multi-way valve connection mode and specifically include the following thermal management modes.

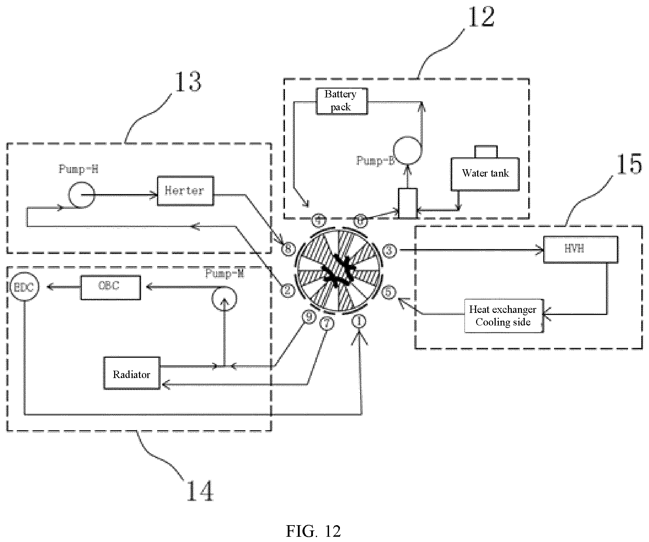

Referring to FIG. 12, provided is a first thermal management mode where the battery pack circulation loop 12 is in communication with the thermal management loop 15, and the rear air conditioning loop 13 is in communication with the motor loop 14, for cooling a battery. The first thermal management mode corresponds to a mode **a** of the multi-way valve.

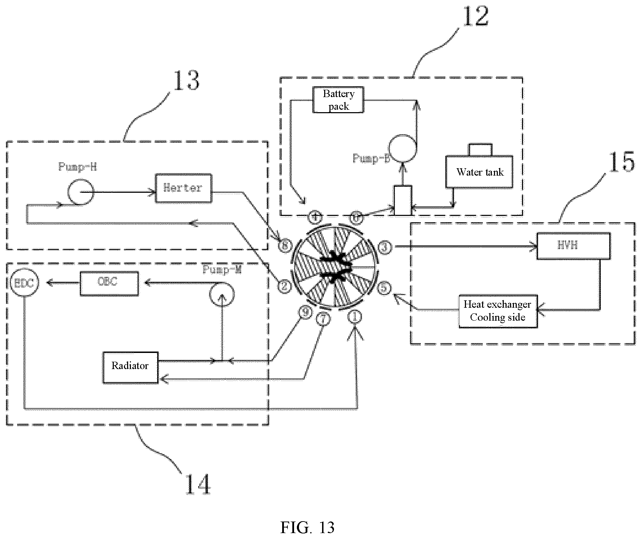

Referring to FIG. 13, provided is a second thermal management mode where the battery pack circulation loop 12 is connected in series with the thermal management loop 15, the rear air conditioning loop 13, and the motor loop 14, for cooling a battery. The second thermal management mode corresponds to a mode **b** of the multi-way valve.

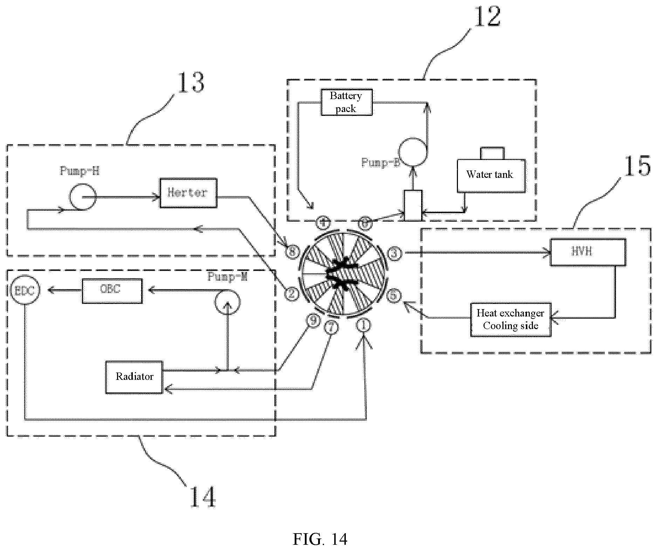

Referring to FIG. 14, provided is a third thermal management mode where the battery pack circulation loop 12 is connected in series with the thermal management loop 15, the rear air conditioning loop 13, and the motor loop 14, for heating the battery. The third thermal management mode corresponds to a mode c of the multi-way valve.

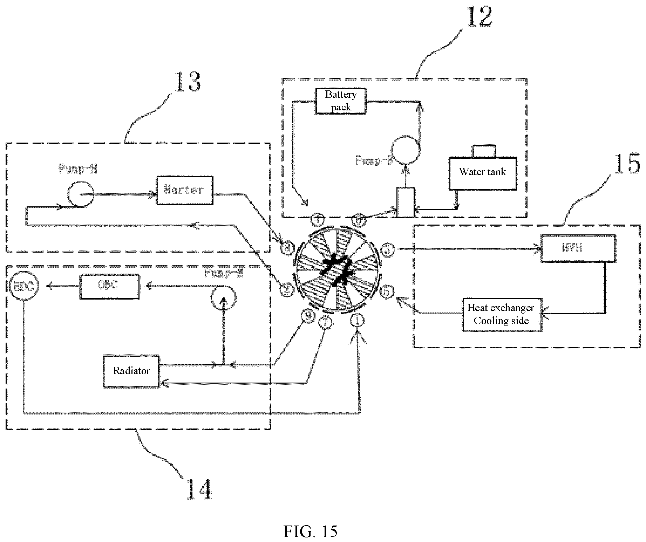

Referring to FIG. 15, provided is a fourth thermal management mode where the thermal management loop 15 is in communication with the motor loop 14, the rear air conditioning loop 13 is in communication with the battery pack loop, and a water tank and a motor absorb heat for heating. The fourth thermal management mode corresponds to a mode **d** of the multi-way valve.

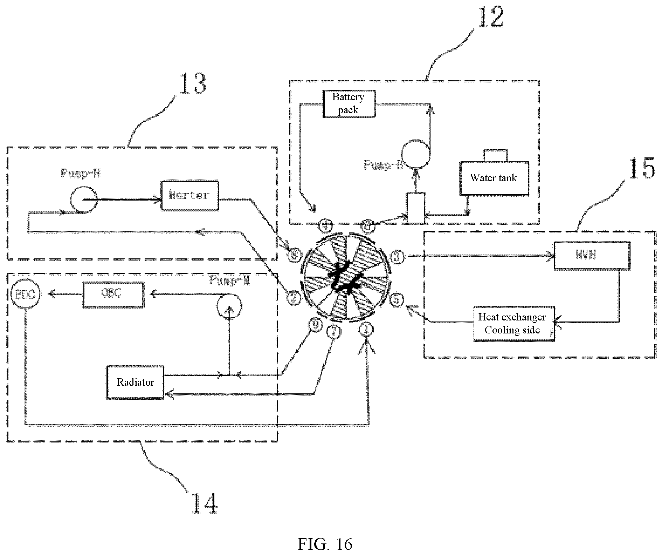

Referring to FIG. 16, provided is a fifth thermal management mode where the thermal management loop 15 is in communication with the motor loop 14, the rear air conditioning loop 13 is in communication with the battery pack loop, and only the motor absorbs heat for heating. The fifth thermal management mode corresponds to a mode e of the multi-way valve.

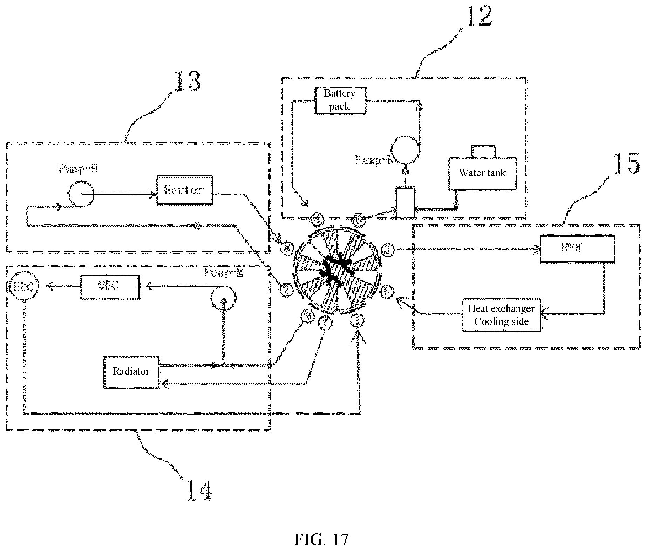

Referring to FIG. 17, provided is a sixth thermal management mode where thermal management mode, the thermal management loop 15 is in communication with the battery pack circulation loop 12, the rear air conditioning loop 13 is in communication with the motor loop 14, the motor stores heat, and the battery exchanges heat with the thermal management loop 15. The sixth thermal management mode corresponds to a mode **f** of the multi-way valve.

Corresponding effects of the thermal management modes are illustrated in the following table.

| Thermal management mode | Multi-way valve connection mode | Loop action | Purpose | Integrated multi-way valve |
|---|---|---|---|---|
| First thermal management mode | Mode **a** | Cool the battery | Cooling in summer | 1-2, 4-3, 5-6, 8-7, 9 are cut off |
| Second thermal management mode | Mode **b** | Spring and autumn battery cooling | Cooling in spring and autumn | 1-2, 4-3, 5-7, 8-6, 9 are cut off |
| Third thermal management mode | Mode **c** | Spring and autumn battery heating | heating in spring and autumn | 1-2, 4-3, 8-6, 5-9, 7 are cut off |
| Fourth thermal management mode | Mode **d** | A motor of the water tank absorbs heat for heating | Winter heating | 1-3, 4-2, 8-6, 5-7, 9 are cut off |
| Fifth thermal management mode | Mode **e** | Only the motor absorbs heat for heating | Battery heating | 1-3, 4-2, 8-6, 5-9, 7 are cut off |
| Sixth thermal management mode | Mode **f** | The motor stores heat, and the battery exchanges heat with the thermal management loop 15 | Electric drive heat storage | 1-2, 4-3, 5-6, 8-9, 7 are cut off |
| Seventh thermal management mode | Mode **g** | Reservation mode | | 1-3, 4-2, 8-9, 5-6, 7 are cut off |
| Eighth thermal management mode | Mode **h** | Reservation mode | | 1-3, 4-2, 5-6, 8-7, 9 are cut off |

### Fifth embodiment

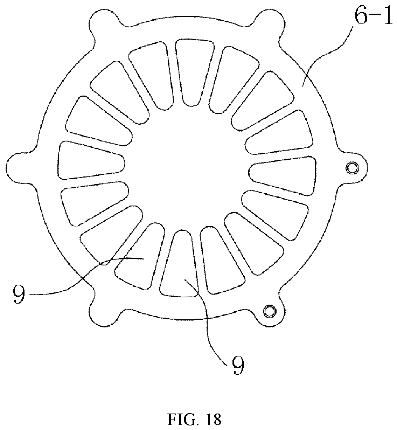

Referring to FIG. 18, based on a structure of the valve seat 6-1 of the second embodiment, other seven external connection apertures 8 of eight external connection apertures 8 are divided into two switching apertures 9 that are arranged in the circumferential direction of the valve seat 6-1 by a partition 11. The divided switching apertures 9 are connected to a conduction region 5-1 or a cutoff region 5-2 of a docking region 5. The valve seat 6-1 is externally connected to sixteen external channels to realize a sixteen-way valve.

In summary, the present disclosure provides an integrated valve core and a multi-way valve thereof, and a thermal management system for a vehicle body.

First, the present disclosure provides an integrated valve core. Through an arrangement and layout of the conduction region 5-1 and the cutoff region 5-2 in the docking region 5 in the valve core, when there are two external channels needing to perform alternate state switching between conduction and cutoff, the valve core has a structural foundation for realizing alternate state switching.

Second, the present disclosure provides an integrated multi-way valve. Through the arrangement and layout of the conduction region 5-1 and the cutoff region 5-2 in the docking region 5 in the valve core, while the valve seat 6-1 is correspondingly designed with at least one group of switching apertures 9, two switching apertures 9 in one group of switching apertures 9 are docked with the conduction region 5-1 and the cutoff region 5-2 of the docking region 5 during rotation of the valve core. When corresponding arrangement directions of the conduction region 5-1 and the cutoff region 5-2 change, switching between conduction and cutoff of the two switching apertures 9 is realized, and the switching structure may be applied to integration of various multi-way valves. Moreover, all inlet pipeline interfaces and outlet pipeline interfaces are centrally arranged at one mounting surface. Positions of the interfaces are unified, which greatly improves an arrangement space and beautification of pipelines connected to the interfaces. Through one integrated valve, a purpose of nine passages is realized, which can satisfy functions of a three-way solenoid valve and two four-way solenoid valves, further realizing switching requirements of thermal management operation conditions for the vehicle body by controlling an angle of the valve core. In addition, the product is low in cost, totaling >-200RMB per vehicle, and light in weight, totaling >-500g per vehicle.

Third, the integrated valve pump apparatus of the present disclosure has a high integration degree. The integrated valve pump apparatus is used to form the waterway connection channel, which can reduce a usage amount of valves and a usage amount of pipelines, lighten weights, and decrease the space occupied by the layout, thereby reducing flow resistance and a heat leakage of the thermal management system, and achieving purposes of high efficiency and energy saving.

Fourth, by adopting the integrated multi-way valve or the integrated valve pump apparatus, the thermal management system for the vehicle body of the present disclosure may reduce the number of valves and pipelines, lighten the weights, decrease the space occupied by the layout, while also ensure corresponding conversion through switching of different modes of the multi-way valve, making switching modes more diverse, thereby satisfying more designs for the thermal management operation conditions for the vehicle body. Therefore, the present disclosure effectively overcomes some practical problems in the prior art, and thus has high utilization values and use significance.

The above embodiments merely illustrate exemplarily principles and efficacy of the present disclosure, rather than limit the present disclosure. Anyone skilled in the art can make modifications or variations to the above-described embodiments without departing from the spirit and scope of the present disclosure. Therefore, all equivalent modifications or variations made by those skilled in the art without departing from the spirit and technical ideas disclosed in the present disclosure should still be covered by the claims of the present disclosure.

## Claims

1. An integrated valve core, comprising a valve core body having at least two docking regions at an end surface of the valve core body, the at least two docking regions being arranged in a circular array around an axis of the valve core body,
wherein each of the at least two docking regions comprises a conduction region and a cutoff region that are arranged in a circumferential direction of the valve core body, the conduction region penetrating in an axial direction of the valve core body, and the cutoff region being obstructive in the axial direction of the valve core body,
wherein for two adjacent docking regions of the at least two docking regions, the conduction region of one of the two adjacent docking regions is adjacent to the conduction region of another one of the two adjacent docking regions, or the cutoff region of one of the two adjacent docking regions is adjacent to the cutoff region of another one of the two adjacent docking regions.

2. The integrated valve core according to claim 1, wherein the at least two docking regions are an even number of docking regions and evenly divided into two groups of docking regions,
wherein in the circumferential direction of the valve core body, the conduction region is located in front of the cutoff region in each docking region of one of the two groups of docking regions, and the conduction region is located behind the cutoff region in each docking region of another one of the two groups of docking regions.

3. The integrated valve core according to claim 2, wherein the two groups of docking regions are symmetrically arranged relative to a diameter of the end surface of the valve core body, the one of the two groups of docking regions being located at a side of a symmetry line, and the other one group of the two groups of docking regions being located at another side of the symmetry line.

4. The integrated valve core according to any one of claims 1 to 3, wherein the valve core body comprises:
a valve core member having eight docking apertures evenly distributed at an end surface of the valve core member in a circumferential direction of the valve core member, the valve core member having four connection channels, each of the four connection channels connecting two docking apertures of the eight docking apertures, and the two connected docking apertures being separated by one docking aperture;
a first end cover connected to a first end of the valve core member; and
a second end cover connected to a second end of the valve core member, the at least two docking regions being disposed at the second end cover, and each of the at least two docking regions corresponding to one docking aperture of the eight docking apertures.

5. The integrated valve core according to claim 4, wherein the eight docking apertures comprise four axial blind holes and four axial through holes that are formed on the valve core member, wherein the four axial blind holes and the four axial through holes are alternately arranged in the circumferential direction of the valve core member, two connection channels of the four connection channels connecting two pairs of axial blind holes of the four axial blind holes, and another two connection channels of the four connection channels connecting two pairs of axial through holes of the four axial through holes.

6. The integrated valve core according to claim 5, wherein:
the two connection channels that connect the two pairs of axial blind holes are located at a side of the valve core member close to the second end cover; and
the two connection channels that connect the two pairs of axial through holes are located at a side of the valve core member close to the first end cover.

7. An integrated multi-way valve, comprising:
a valve core body having at least two docking regions at an end surface of the valve core body, the at least two docking regions being arranged in a circular array around an axis of the valve core body, wherein each of the at least two docking regions comprises a conduction region and a cutoff region that are arranged in a circumferential direction of the valve core body, the conduction region penetrating in an axial direction of the valve core body, and the cutoff region being obstructive in the axial direction of the valve core body, wherein for two adjacent docking regions of the at least two docking regions, the conduction region of one of the two adjacent docking regions is adjacent to the conduction region of another one of the two adjacent docking regions, or the cutoff region of one of the two adjacent docking regions is adjacent to the cutoff region of another one of the two adjacent docking regions; and
a valve seat disposed coaxially with the valve core body and rotatably relative to the valve core body, the valve seat having at least two external connection apertures configured to rotationally switch the at least two docking regions, each of at least one of the at least two external connection apertures being divided into two switching apertures that are arranged in a circumferential direction of the valve seat by a partition, and the two switching apertures divided by the external connection aperture being connected to a conduction region or a cutoff region of a corresponding docking region of at least two docking regions, respectively, wherein when the valve core body and the valve seat relatively rotate until an arrangement of the conduction region and the cutoff region of adjacent docking regions of at least two docking regions changes, the two switching apertures are switchable between a conduction state and a cutoff state.

8. The integrated multi-way valve according to claim 7, wherein during a mode switching of the integrated multi-way valve, a rotation angle of the valve core body relative to the valve seat is an integer multiple of a circumferential array angle between adjacent docking regions of at least two docking regions.

9. The integrated multi-way valve according to claim 8, wherein the at least two docking regions are an even number of docking regions and evenly divided into two groups of docking regions, wherein:
in the circumferential direction of the valve core body, the conduction region is located in front of the cutoff region in each docking region of one of the two groups of docking regions, and the conduction region is located behind the cutoff region in each docking region of another one of the two groups of docking regions; and
the two groups of docking regions are symmetrically arranged relative to a diameter of the end surface of the valve core body, the one of the two groups of docking regions being located at a side of a symmetry line, and the other one group of the two groups of docking regions being located at another side of the symmetry line.

10. The integrated multi-way valve according to any one of claims 7 to 9, wherein:
the valve core body comprises a valve core member, a first end cover connected to a first end of the valve core member, and a second end cover connected to a second end of the valve core member, the second end cover being uniformly divided into eight docking regions in a circumferential direction of the second end cover;
the valve core member has eight docking apertures evenly distributed at an end surface of the second end of the valve core member in a circumferential direction of the valve core member, each of the eight docking apertures corresponding to one docking region of the eight docking regions, the valve core member having four connection channels, each of the four connection channels connecting two docking apertures of the eight docking apertures, and the two connected docking apertures being separated by one docking aperture;
the valve seat has eight external connection apertures, each of the eight external connection apertures corresponding to one docking region of the eight docking regions, and one of the eight external connection apertures being divided into two switching apertures; and
the integrated multi-way valve is switchable between eight modes when the valve core body and the valve seat relatively rotate.

11. The integrated multi-way valve according to claim 10, wherein seven external connection apertures of the eight external connection apertures are a first connection aperture, a second connection aperture, a third connection aperture, a fourth connection aperture, a fifth connection aperture, a sixth connection aperture, and an eighth connection aperture, respectively, and wherein the two switching apertures are a seventh connection aperture and a ninth connection aperture, respectively; wherein:
the first connection aperture, the fifth connection aperture, the third connection aperture, the sixth connection aperture, the fourth connection aperture, the eighth connection aperture, the second connection aperture, the ninth connection aperture, and the seventh connection aperture are sequentially arranged in a first rotational direction, a counterclockwise direction, of the valve core body; a circumferential angle between two adjacent external connection apertures of the seven external connection apertures is 45°; and
the connection mode comprises:
a mode **a:** the first connection aperture is in communication with the second connection aperture, the fourth connection aperture is in communication with the third connection aperture, the fifth connection aperture is in communication with the sixth connection aperture, the eighth connection aperture is in communication with the seventh connection aperture, and the ninth connection aperture is cut off;
a mode **b:** a valve core rotates by 45° in the first rotational direction relative to the valve seat in a state of the mode **a;**
a mode **c:** the valve core rotates by 225° in the first rotational direction relative to the valve seat in the state of the mode **a;**
a mode **d:** the valve core rotates by 90° in the first rotational direction relative to the valve seat in the state of the mode **a;**
a mode **e:** the valve core rotates by 270° in the first rotational direction relative to the valve seat in the state of the mode **a;**
a mode **f:** the valve core rotates by 180° in the first rotational direction relative to the valve seat in the state of the mode **a;**
a mode **g:** the valve core rotates by 135° in the first rotational direction relative to the valve seat in the state of the mode **a;** and
a mode **h:** the valve core rotates by 315° in the first rotational direction relative to the valve seat in the state of the mode **a.**

12. The integrated multi-way valve according to claim 11, wherein the external connection aperture is internally provided with a radial reinforcing rib.

13. The integrated multi-way valve according to claim 12, further comprising:
a valve cover through cooperating with the valve seat to mount the valve core body; and
a drive mechanism disposed at the valve cover and configured to drive the valve core body to rotate relative to the valve seat.

14. The integrated multi-way valve according to claim 13, further comprising:
a first sealing pad disposed between the second end cover and the valve seat, the first sealing pad having an opening corresponding to the external connection aperture.

15. The integrated multi-way valve according to any one of claims 7 to 9, wherein each of the external connection apertures is divided into two switching apertures, the two switching apertures divided by the external connection aperture being connected to a conduction region or a cutoff region of a corresponding docking region of at least two docking regions, respectively.

16. An integrated valve pump apparatus, comprising:
the integrated multi-way valve according to any one of claims 11 to 14; and
a double-layer flow integrated plate, wherein:
the integrated multi-way valve is mounted at the double-layer flow integrated plate;
the double-layer flow integrated plate is further mounted with a motor pump assembly, a battery pump assembly, a three-way proportional valve assembly, and a plurality of pipeline interfaces;
the double-layer flow integrated plate has a plurality of hole channels formed therein; and
the plurality of hole channels cooperate with the integrated multi-way valve, the motor pump assembly, the battery pump assembly, the three-way proportional valve, and the plurality of pipeline interfaces to form a waterway connection channel.

17. The integrated valve pump apparatus according to claim 16, wherein the double-layer flow integrated plate comprises an integrated plate body, a first end plate, and a second end plate, wherein:
the first end plate and the second end plate are fixedly connected to two end surfaces of the integrated plate body, respectively;
two sides of the integrated plate body are provided with the motor pump assembly and the battery pump assembly, respectively;
the integrated plate body has several pipeline interfaces of the plurality of pipeline interfaces formed on a top surface of the integrated plate body;
the integrated plate body has several hole channels of the plurality of hole channels formed thereon;
the integrated multi-way valve is mounted on the first end plate;
the first end plate has a positioning hole engaged with an external connection aperture;
the three-way proportional valve assembly is mounted on the second end plate; and
the second end plate has several pipeline interfaces of the plurality of pipeline interfaces formed thereon.

18. The integrated valve pump apparatus according to claim 17, wherein:
the integrated plate body has a first hole channel and a second hole channel at a middle part of the integrated plate body;
the first hole channel has a fifth hole channel at a lower side of the first hole channel;
the second hole channel has a third hole channel at a lower side of the second hole channel;
a fourth hole channel is formed between the third hole channel and the fifth hole channel;
a sixth hole channel is formed at a side of the integrated plate body connected to the motor pump assembly and is in communication with each of the first hole channel and the motor pump assembly;
a seventh hole channel is formed at a side of the integrated plate body connected to the battery pump assembly and is in communication with each of the second hole channel and the battery pump assembly;
three three-way valve hole channels are formed at an upper side of each of the first hole channel and the second hole channel;
two ends of each of the first hole channel, the second hole channel, the third hole channel, the fourth hole channel, and the fifth hole channel are in communication with the positioning hole and the plurality of pipeline interfaces, respectively; and
two ends of each of the three three-way valve hole channels are in communication with the positioning hole and the three-way proportional valve assembly, respectively, two three-way valve hole channels of the three three-way valve hole channels being in communication with two pipeline interfaces of the plurality of pipeline interfaces located on the top surface of the integrated plate body.

19. The integrated valve pump apparatus according to claim 18, wherein:
the second end plate has a first pipeline interface, a second pipeline interface, a third pipeline interface, a fourth pipeline interface, a fifth pipeline interface, and a sixth pipeline interface that are matched with the first hole channel, the second hole channel, the third hole channel, the fourth hole channel, the fifth hole channel, and the sixth hole channel, respectively; and
the integrated plate body has a seventh pipeline interface, an eighth pipeline interface, a ninth pipeline interface, and a tenth pipeline interface that are formed on the top surface of the integrated plate body, the seventh pipeline interface being in communication with the sixth hole channel, the eighth pipeline interface being in communication with the seventh hole channel, and the ninth pipeline interface and the tenth pipeline interface being in communication with the two three-way valve hole channels, respectively.

20. A thermal management system for a vehicle body, comprising:
the integrated multi-way valve according to any one of claims 11 to 14, or the integrated valve pump apparatus according to any one of claims 17 to 19;
a battery pack circulation loop;
a rear air conditioning loop;
a motor loop; and
a thermal management loop,
wherein thermal management modes of the thermal management system for the vehicle body are switchable based on a multi-way valve connection mode.

21. The thermal management system according to claim 20, wherein the thermal management modes comprise:
a first thermal management mode: the battery pack circulation loop is in communication with the thermal management loop, and the rear air conditioning loop is in communication with the motor loop, for cooling a battery;
a second thermal management mode: the battery pack circulation loop is connected in series with the thermal management loop, the rear air conditioning loop, and the motor loop, for cooling the battery;
a third thermal management mode: the battery pack circulation loop is connected in series with the thermal management loop, the rear air conditioning loop, and the motor loop, for heating the battery;
a fourth thermal management mode: the thermal management loop is in communication with the motor loop, the rear air conditioning loop is in communication with the battery pack loop, and a water tank and a motor absorb heat for heating;
a fifth thermal management mode: the thermal management loop is in communication with the motor loop, the rear air conditioning loop is in communication with the battery pack loop, and only the motor absorbs heat for heating; and
a sixth thermal management mode: the thermal management loop is in communication with the battery pack circulation loop, the rear air conditioning loop is in communication with the motor loop, the motor stores heat, and the battery exchanges heat with the thermal management loop.

22. The thermal management system according to claim 21, wherein the first thermal management mode, the second thermal management mode, the third thermal management mode, the fourth thermal management mode, the fifth thermal management mode, and the sixth thermal management mode correspond to the mode **a,** the mode **b,** the mode **c,** the mode **d,** the mode **e,** and the mode **f,** sequentially.

23. The thermal management system according to claim 22, the thermal management modes further comprise:
two reservation modes corresponding to the mode **g** and the mode **h,** respectively.
